# EUROPEAN PATENT APPLICATION

(11) **EP 1 361 508 A1**
(43) Date of publication of application: **12.11.2003**
(21) Application number: 03010492.1
(22) Date of filing: 09.05.2003
(51) Int. Cl.: G06F 9/24, H04Q 7/32

(54) **Apparatus control system**

(30) Priority: 10.05.2002 JP 2002135120
(71) Applicant: MATSUSHITA ELECTRIC INDUSTRIAL CO., LTD., Kadoma-shi, Osaka 571-8501 (JP)
(72) Inventor: Takeuchi, Yasuo, Yokohama-shi, Kanagawa 231-0015 (JP); Sasaki, Osamu, Tokyo 144-0046 (JP); Nakanishi, Yoshiaki, Tokyo 166-0014 (JP); Takagi, Yoshihiko, Tokyo 144-0046 (JP); Inoue, Kazunori, Tokyo 179-0085 (JP)
(74) Representative: Grünecker, Kinkeldey, Stockmair & Schwanhäusser Anwaltssozietät

(57) **Abstract**

An apparatus control system which is comprised of second apparatus 200 having communication functions, third apparatus 300 connected to second apparatus 200, and first apparatus 100 that communicates with second apparatus 200, and which controls second apparatus 200 safely against fears such as spoofing and leaks of control instructions. In the system, first apparatus 100 transmits an instruction for requesting an issue of a control instruction for second apparatus 200 to third apparatus 300 via second apparatus 200, third apparatus 300 generates the control instruction for second apparatus 200 to transmit to instruction executing section 202 in second apparatus 200, and second apparatus 200 executes the instruction in instruction executing section 202. In this way, first apparatus 100 is capable of controlling second apparatus 200 without leaks of control instruction including remote control, and it is thus possible to establish the apparatus control system with data integrity assured and with high security.

## Description

### BACKGROUND OF THE INVENTION

### Field of the Invention

The present invention relates to an apparatus control system, and more particularly, to an apparatus control system that performs control of instruction and execution among three apparatuses.

### Description of the Related Art

In systems where a first apparatus directly controls a second apparatus, there is a possibility that tampering and leaks of contents of control instructions occur in addition to so-called spoofing, thus anxiety remains in the security, and conventionally, a third apparatus is added to overcome the anxiety in the security.

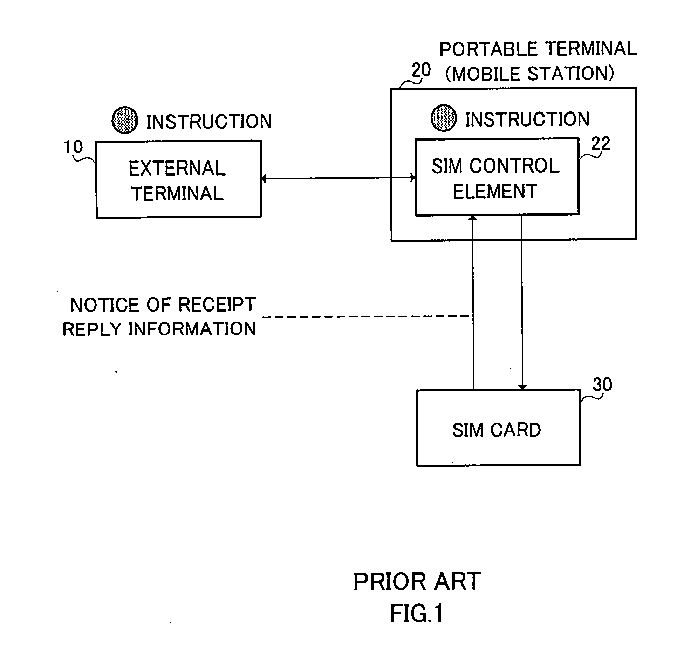

An example of conventional apparatus control system that controls instruction and execution among three apparatuses is described in JP2001-508253, which discloses a method where external terminal (first apparatus) 10 conveys control instructions to SIM card (third apparatus) 30 that mobile station (second apparatus) 20 holds (see FIG.1). By using this method, the external apparatus is capable of controlling information of SIM card 30 connected to portable terminal (mobile station) 20 via SIM control element 22 of portable terminal 20. The control instruction transmitted from the outside or SIM control element 22 is transferred directly to SIM card 30 without being converted, and the instruction is executed. SIM card 30 outputs reply information or notice of receipt to mobile station 20. At this point, the control instruction transferred from outside or SIM control element 20 has the same contents as the instruction executed in SIM card 30. Further, the control instruction transmitted to SIM card 30 is to control SIM card 30.

However, this method does not take measures against tampering and surreptitious glance of contents of a control instruction in transmitting the control instruction or storing the control instruction inside the apparatus, and therefore, the transfer of the control instruction between terminals is not sufficiently high in the security when external terminal 10 controls portable terminal 20. Thus, an original object has not been achieved of constructing a system where a first apparatus is capable of controlling a second apparatus in consideration of the security.

In the method where the first apparatus directly transmits control instructions to the second apparatus to control, despite the fact that there are cases that the control instructions are tampered or glanced surreptitiously, effective countermeasures against such cases are few.

When a control instruction is tampered, since contents of the tampered control instruction from outside are directly issued to an apparatus targeted for the control, there is a risk that the tampered control instruction may be executed. Meanwhile, when the contents of the control instruction to an apparatus are glanced surreptitiously, there is a risk that the code of the control instruction is taught to a hostile third party.

Accordingly, the need is extremely high for establishing an apparatus control system provided with integrity and concealment of data including authentication of a first apparatus and transmitted control instructions.

### SUMMARY OF THE INVENTION

It is an object of the present invention to provide an apparatus control system capable of controlling a second apparatus safely against threats such as spoofing and leaks of control instructions in a system composed of the second apparatus with communication functions, a third apparatus that connects to the second apparatus, and a first apparatus that communicates with the second apparatus.

The subject matter of the present invention is that the first apparatus does not directly transmit control instructions to the second apparatus, the third apparatus connected to the second apparatus controls the second apparatus instead, thereby enhancing the security of authentication, and the second apparatus executes processing using control instructions registered with the third apparatus.

According to an aspect of the invention, in the apparatus control system, in order for the first apparatus to control the second apparatus, the first apparatus transmits via the second apparatus an issue instruction that is an instruction for requesting an issue of a control instruction to the third apparatus that stores the control instruction for the second apparatus, the third apparatus transmits the control instruction to the second apparatus, and the second apparatus executes the control instruction.

According to another aspect of the invention, the apparatus control system is provided with the first apparatus having a transmitting section that transmits an issue instruction that is an instruction for issuing a control instruction for the second apparatus, the second apparatus having an instruction executing section that executes the control instruction from the third apparatus, and the third apparatus having a control instruction generating section that generates a control instruction for the second apparatus and a terminal control section that issues the control instruction to the second apparatus, where the second apparatus transfers the issue instruction received from the first apparatus to the third apparatus, and the third apparatus transmits to the second apparatus a control instruction corresponding to the issue instruction transferred from the second apparatus.

According to still another aspect of the invention, an apparatus control apparatus has a control instruction generating section that generates a control instruction for a second apparatus and a communication section that communicates with the second apparatus, where an issue instruction that is an instruction for requesting an issue of a control instruction for the second apparatus is received from the second apparatus, while a control instruction corresponding to the issue instruction is transmitted to the second apparatus.

According to a further aspect of the invention, an issue instruction transmitting apparatus has a section that performs wired communications and/or wireless communications and an issue instruction generating section that generates an issue instruction that is an instruction for requesting an issue of a control instruction for a second apparatus, where the issue instruction is transmitted to the second apparatus.

According to a still further aspect of the invention, a control instruction executing apparatus has a section that communicates with a first apparatus, a section that communicates with a third apparatus and an instruction executing section that executes a control instruction, where an issue instruction that is an instruction for requesting an issue of a control instruction received from the first apparatus is transferred to the third apparatus, while the control instruction corresponding to the issue instruction is received from the third apparatus to be executed.

According to a yet further aspect of the invention, a program has the steps of generating an issue instruction that is an instruction for requesting an issue of a control instruction for a second apparatus, and transmitting the generated instruction to the second apparatus.

According to a yet further aspect of the invention, a program has the steps of receiving an issue instruction that is an instruction for requesting an issue of a control instruction for a second apparatus from the second apparatus, generating the control instruction corresponding to the issue instruction, and transmitting the control instruction to the second apparatus.

According to a yet further aspect of the invention, a program executed in a second apparatus has the steps of receiving an issue instruction that is an instruction for requesting an issue of a control instruction for a second apparatus from a first apparatus, transmitting the received issue instruction to a third apparatus, receiving the control instruction corresponding to the issue instruction from the third apparatus, and executing the received control instruction.

### BRIEF DESCRIPTION OF THE DRAWINGS

The above and other objects and features of the invention will appear more fully hereinafter from a consideration of the following description taken in connection with the accompanying drawings wherein one example is illustrated by way of example, in which:
FIG.1 is a diagram illustrating an example of conventional apparatus control system;
FIG.2 is a block diagram illustrating a configuration of an apparatus control system according to a first embodiment of the present invention;
FIG.3 is a block diagram illustrating a configuration of an apparatus control system according to a second embodiment of the present invention;
FIG. 4 is a block diagram illustrating data exchanged in the apparatus control system according to the second embodiment of the present invention;
FIG.5 is a block diagram illustrating a configuration of an apparatus control system according to a third embodiment of the present invention;
FIG.6 6 is a view showing examples of control instructions stored in a storage section of an IC card in the apparatus control system according to the third embodiment of the present invention;
FIG. 7A is a view showing contents of data transferred from a transmission instruction generating section in a general subscriber telephone to a transmitting section in a general subscriber telephone in the third embodiment of the present invention;
FIG. 7B is a view showing contents of data transferred from the transmitting section of the general subscriber telephone to a receiving section in a cellular telephone in the third embodiment of the present invention;
FIG. 7C is a view showing contents of data transferred from the receiving section in the cellular telephone to a control instruction generating section in the IC card in the third embodiment of the present invention;
FIG. 7D is a view showing contents of data transferred from the control instruction generating section in the IC card to an encryption processing section in the IC card in the third embodiment of the present invention;
FIG. 7E is a view showing contents of data transferred from a storage section in IC card to the encryption processing section in the IC card in the third embodiment of the present invention;
FIG. 7F is a view showing contents of data transferred from the encryption processing section in the IC card to a control instruction generating section in the IC card in the third embodiment of the present invention;
FIG. 7G is a view showing contents of data transferred from the storage section in the IC card to the control instruction generating section in the IC card in the third embodiment of the present invention;
FIG. 7H is a view showing contents of data transferred from the control instruction generating section in the IC card to a terminal control section in the IC card in the third embodiment of the present invention;
FIG. 7I is a view showing contents of data transferred from the terminal control section in the IC card to an instruction executing section in the cellular telephone in the third embodiment of the present invention;
FIG. 7J is a view showing contents of data transferred from the instruction executing section in the cellular telephone to a position information acquiring section in the cellular telephone in the third embodiment of the present invention;
FIG. 7K is a view showing contents of data transferred from the instruction executing section in the cellular telephone to a transmitting section in the cellular telephone in the third embodiment of the present invention;
FIG. 7L is a view showing contents of data transferred from the instruction executing section in the cellular telephone to the control instruction generating section in the IC card in the third embodiment of the present invention;
FIG. 7M is a view showing contents of data transferred from a transmitting section in the cellular telephone to a receiving section in the general subscriber telephone in the third embodiment of the present invention; and
FIG. 7N is a view showing contents of data transferred from the receiving section in the general subscriber telephone to an output section in the general subscriber telephone in the third embodiment of the present invention

### DETAILED DESCRIPTION OF THE PREFERRED EMBODIMENTS

With reference now to the attached drawings, embodiments of the present invention will be explained in detail below.

### (Embodiment 1)

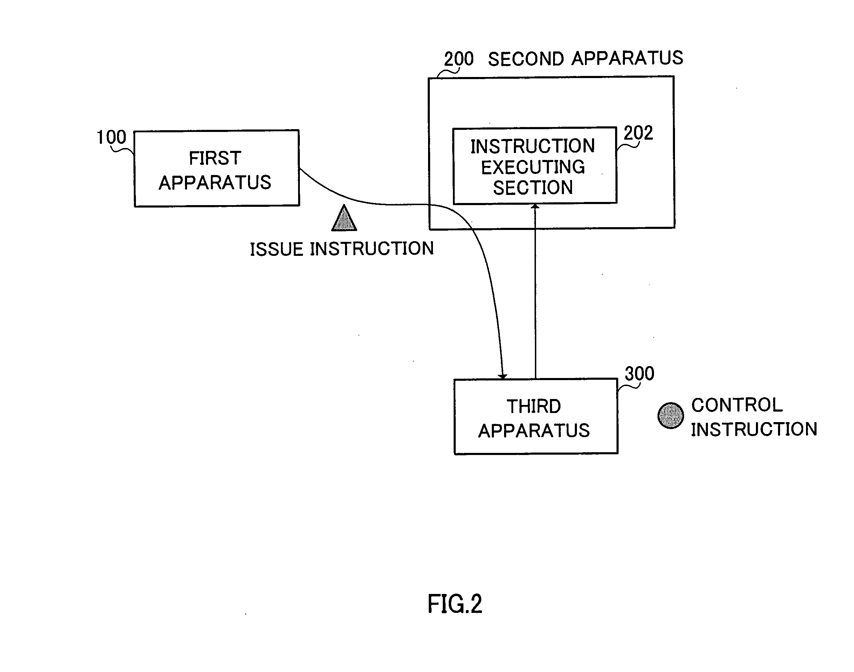

FIG.2 is a block diagram illustrating a configuration of an apparatus control system according to the first embodiment of the present invention.

The apparatus control system in this embodiment has first apparatus 100, second apparatus 200 and third apparatus 300.

As distinct from a conventional apparatus control system where first apparatus 100 directly transmits a control instruction to second apparatus 200 when first apparatus 100 controls second apparatus 200, in the apparatus control system with the above-mentioned configuration, third apparatus 300 that assures the security protection of data stores control instructions for second apparatus 200, first apparatus 100 requests an issue of a control instruction stored in third apparatus 300, and third apparatus 300 controls second apparatus 200.

More specifically, first apparatus 100 transmits an issue instruction for second apparatus 200 to third apparatus 300 as a trigger. Third apparatus 300 receives the issue instruction that is an instruction for requesting an issue of a control instruction from first apparatus 100 via second apparatus 200, performs predetermined processing on the issue instruction, and issues the control instruction stored in the apparatus 300 to second apparatus 200. Then, second apparatus 200 receives the control instruction, executes the control instruction in instruction executing section 202 in the apparatus 200, and transmits an execution result.

### (Embodiment 2)

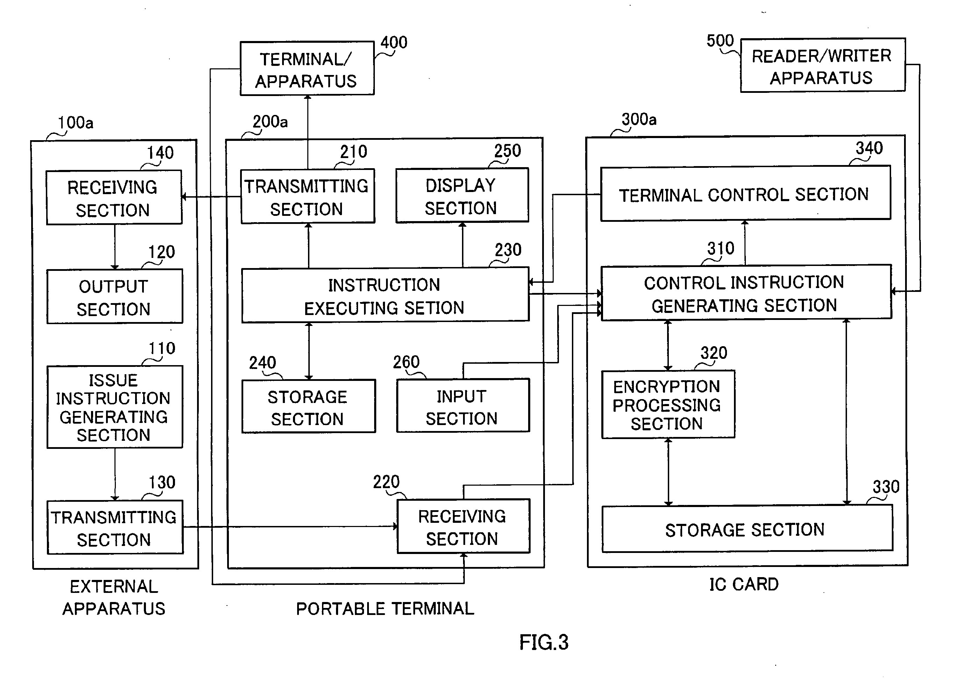

FIG.3 is a block diagram illustrating a configuration of an apparatus control system according to the second embodiment of the present invention.

The apparatus control system in this embodiment has the same basic configuration as that of the apparatus control system explained in the first embodiment, and has a configuration provided with external terminal 100a as first apparatus 100, portable terminal 200a such as a cellular telephone and PDA (Personal Digital Assistance) as second apparatus 200, and IC card 300a as third apparatus 300.

In addition, the apparatus control system of this embodiment may have a microcomputer card or another card with such a function, instead of IC card 300a. Further, the IC card herein includes a device with the IC card and memory card. Furthermore, as third apparatus 300 of the present invention, any devices are available independently of their name such as an IC card, as long as the devices are memory devices that are detachable from second apparatus 200 and have tamper-resistant areas to store control instructions to be transmitted to second apparatus 200.

Herein, terminology of "portable terminal" is used in the broad sense including cellular telephone and PDA, but may be used as distinguished from a cellular telephone in the narrow sense. Portable terminal 200a as the second apparatus is in the broad sense as described, and includes all mobile portable devices.

The apparatus control system has external terminal 100a, portable terminal 200a that has functions of communicating with outside, and IC card 300a capable of connecting to portable terminal 200a.

External terminal 100a that transmits an issue instruction has issue instruction generating section 110 that generates an issue instruction, an output section 120 that outputs a received execution result, and transmitting section 130 and receiving section 140 to communicate with other apparatuses.

Portable terminal 200a has transmitting section 210 and receiving apparatus 220 to communicate with external apparatus 100a, instruction executing section 230 that executes a control instruction, storage section 240 that stores information therein, display section 250 that displays an execution result and stored information, and input section 260 that inputs data to portable terminal 200a.

IC card 300a has control instruction generating section 310 that generates a control instruction, encryption processing section 320 that has a deencryption section and transmits a verification result to control instruction generating section 310, storage section 330 that stores information (for example, personal information, control instruction and public key of each terminal), and terminal control section 340 that issues a control instruction to portable terminal 200a.

In addition, the connection between portable terminal 200a and IC card 300a supports contact type and non-contact type. In other words, it is not required necessarily to insert IC card 300a to a slot of portable terminal 200a.

The operation will be described below that an issue instruction transmitted from external terminal 100a is transferred to IC card 300a via portable terminal 200a.

Issue instruction generating section 110 in external terminal 100a generates an issue instruction for portable terminal 200a to output to transmitting section 130. A signature by external terminal 100a is added to the issue instruction, whose data integrity is assured. In addition, the issue instruction may include data input manually.

Transmitting section 130 transmits the received issue instruction to receiving section 220 in portable terminal 200a. Receiving section 220 transmits the received issue instruction to control instruction generating section 310 in IC card 300a. Control instruction generating section 310 outputs the received issue instruction to encryption processing section 320.

Encryption processing section 320 fetches a public key of external terminal 100a from storage section 330 to verify the signature, and performs signature verification of the received issue instruction and authentication of the external terminal. When the signature verification succeeds, the received issue instruction has the integrity. Encryption processing section 320 outputs the result to control instruction generating section 310.

When an output result of encryption processing section 320 indicates "success", control instruction generating section 310 acquires a control instruction stored in storage section 330, according to the issue instruction from external terminal 100a.

In addition, in acquiring a control instruction, control instruction generating section 310 may generate a control instruction, or may select and extract one or more from one or more control instructions stored beforehand.

Control instruction generating section 310 outputs the acquired control instruction to terminal control section 340. Terminal control section 340 transmits a control instruction to instruction executing section 230 in portable terminal 200a.

Instruction executing section 230 executes the control instruction from terminal control section 340. A result of execution (execution result) of the control instruction is output to display section 250 when the result needs to be displayed, while being output to transmitting section 210 when the result needs to be transmitted to receiving section 140 in external terminal 100a and/or other terminal/apparatus 400, depending on the type of the result. Log of the execution result is transmitted to control instruction generating section 310 in IC card 300a. In addition, instruction executing section 230 is capable of referring to, modifying, deleting and/or storing information in storage section 240 when necessary. Further, the section 230 is capable of accessing to an external terminal (not shown) and/or external storage medium (not shown) connected to the terminal 200a, in executing a control instruction.

Control instruction generating section 310 stores the log of the execution result in storage section 330. Display section 250 receives the execution result or information stored in storage section 240 from instruction executing section 230 to display. Meanwhile, transmitting section 210 transmits the execution result to terminal/apparatus 400 and/or receiving section 140 in external terminal 100a, corresponding to the issued control instruction or information that designates a transmission destination.

Terminal/apparatus 400 that has received the execution result performs processing for each terminal/apparatus using the execution result. The processing by terminal/apparatus 400 includes computation, output, storage, input and control function. In addition, while FIG.3 shows external terminal 100a and terminal/apparatus 400 as separate devices, external terminal 100a and terminal/apparatus 400 may be integrated.

Receiving section 140 in external terminal 100a outputs the received execution result to output section 120. Output section 120 outputs the execution result from receiving section 140.

It is possible to add an operation rule to a control instruction stored in storage section 300 in IC card 300a, using operation rule information transmitted from portable terminal 200a connected to the IC card 300a. The operation for setting the operation rule of a control instruction will be described below. The operation rule is an auxiliary function for constructing environments individually such that a plurality of control instructions is operated by a single control instruction and that an unused control instruction is suspended. The operation rule information is information indicating the operation rule.

Input section 260 transmits the operation rule information and personal information corresponding to a control instruction stored in storage section 330 to control instruction generating section 310.

In addition, a method of transmitting the operation rule information is not limited to the foregoing. For example, the operation rule information may be transmitted from another section other than input section 260 via portable terminal 200a, or transmitted from an apparatus connected to portable terminal 200a. For example, when portable terminal 200a has a reader/writer apparatus, it may be possible that the memory card is inserted to the reader/writer apparatus to acquire the operation rule information stored in the memory card, and the acquired operation rule information is transmitted to control instruction generating section 310.

Control instruction generating section 310 fetches the personal information for authentication from storage section 330 to collate with received personal information. When the authentication for portable terminal 200a succeeds, encryption processing section 320 stores the operation rule information in storage section 330.

In addition, in this embodiment, external terminal 100a only controls portable terminal 200a. When external terminal 100a stores control instructions to control another portable terminal in storage section 330, the terminal 100a is capable of controlling not only portable terminal 200a but also another portable terminal.

The processing will be described below of newly storing a control instruction in IC card 300a and of modifying a stored control instruction. Herein, the processing is explained on the assumption that the apparatus control system has reader/writer apparatus 500.

Reader/writer apparatus 500 transmits a control instruction to store to control instruction generating section 310. The signature is added to the control instruction to store, and data integrity of the instruction is assured.

Control instruction generating section 310 outputs the received control instruction to store to encryption processing section 320. Encryption processing section 320 fetches a public key of reader/writer apparatus 500 from storage section 330 to verify the signature, and performs signature verification of the received control instruction to store and authentication.

When the data integrity is confirmed and authentication of reader/writer apparatus 500b succeeds, encryption processing section 320 outputs the verification result to control instruction generating section 310. When the verification result is "success", the control instruction is stored in storage section 330. It is thus possible to newly register a control instruction and modify control instructions.

In addition, it is possible to delete a control instruction stored in IC card 300a using reader/writer apparatus 500.

In this case, reader/writer apparatus 500 first transmits data (deletion information) for designating a control instruction to delete to control instruction generating section 310 in IC card 300a. The signature is added to the deletion information, and data integrity of the information is assured. Control instruction generating section 310 outputs the received deletion information to encryption processing section 320.

Encryption processing section 320 fetches a public key of reader/writer apparatus 500 from storage section 330 to verify the signature, and performs signature verification of the received deletion information and authentication. When the data integrity is confirmed and authentication of reader/writer apparatus 500 succeeds, encryption processing section 320 outputs the verification result to control instruction generating section 310.

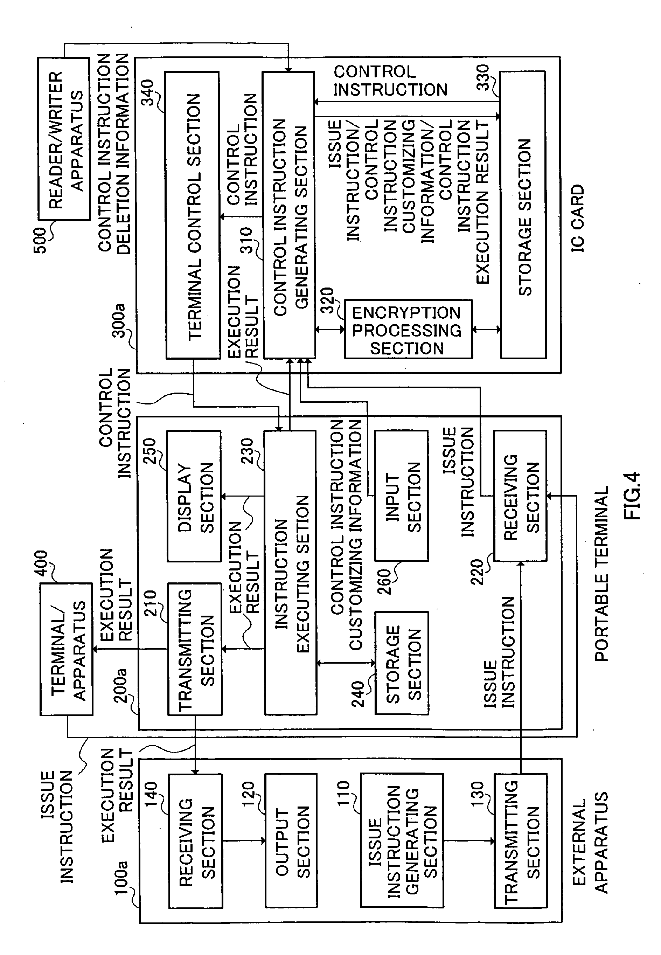

When the verification result is "success", control instruction generating section 310 deletes the control instruction designated by the deletion information from storage section 330. Each data as described above exchanged in this embodiment is as shown in FIG.4.

### (Embodiment 3)

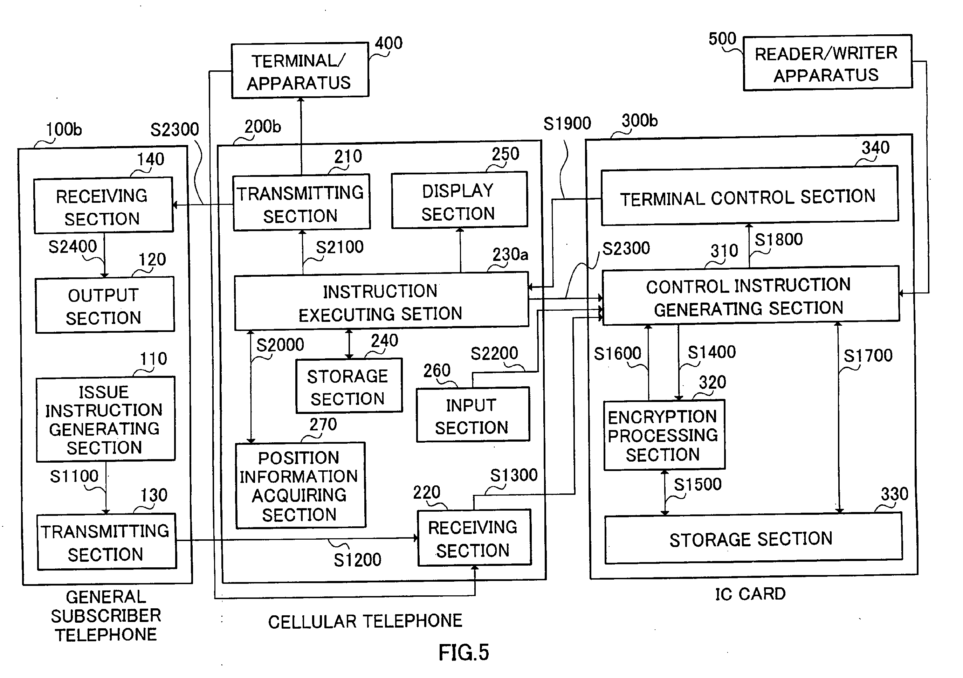

FIG.5 is a block diagram illustrating a configuration of an apparatus control system according to the third embodiment of the present invention.

This embodiment explains a case where an IC card controls a portable terminal by external operation, and acquires position information of the portable terminal. An apparatus control system in this embodiment has the same basic configuration as that of the apparatus control system explained in the second embodiment, and has a configuration provided with general subscriber telephone 100b as external terminal 100a that has a role as a trigger for making portable terminal 200a execute predetermined processing, and cellular telephone 200b as portable terminal 200a. This embodiment is explained on the assumption that IC card 300c is connected to cellular telephone 200b to perform communications.

General subscriber telephone 100b has issue instruction generating section (for example, push buttons) 110, output section (for example, display or speaker) 120, transmitting section 130, receiving section 140 and a section (not shown) for issuing a telephone number of the telephone 100b to a communicating party. Herein, it is assumed that general subscriber telephone 100b uses a PSTN (Public Switched Telephone Network) and has a communication scheme capable of performing concealment communications.

Examples of the external terminal include terminals capable of performing communications using the PSTN such as a cellular telephone, PDA (Personal Digital Assistant) personal computer, and general pay telephone.

Cellular telephone 200b has transmitting section 210 and receiving section 220 to communicate with outside, storage section 240, display section 250, input section 260, position information acquiring section 270 having GPS (Global Positioning System) function or PHS position information function (for acquiring position information using a base station, etc.), instruction executing section 230a, and an internally provided interface (not shown) for communicating data with IC card 300b. Input section 260 denotes, for example, a keyboard, pen or mouse. Display section 250 denotes, for example, a display using CRT or liquid-crystal panel. Storage section 240 denotes, for example, a large-capacity storage device such as a nonvolatile memory and hard disk.

IC card 300b has control instruction generating section 310 that generates a control instruction, encryption processing section 320 that has deencryption section, storage section 330 that has a memory to store data (for example, control instruction for controlling the cellular telephone, control instruction for acquiring position information of the cellular telephone and personal information), terminal control section 340 and an interface (not shown) enabling connections with another apparatus. The deencryption processing used in encryption section 320 includes a public key encryption scheme or common key encryption scheme, for example.

In addition, in acquiring a control instruction, control instruction generating section 310 may generate a control instruction, or may select and extract one or more from one or more control instructions stored beforehand.

Storage section 330 is capable of storing one control instruction or more within an upper limit of the memory capacity. Further, the section 330 is capable of managing one or more control instructions for each instruction, and therefore, performing addition, deletion and modification readily.

The personal information includes, for example, caller telephone number, biometrics information such as fingerprint and iris, an ID assigned to a device such as SIM (Subscriber Identity Module), WIM (Wireless Identity Module) and UIM (User Identity Module) card, and information such as a password that a user sets individually.

The operation will be described below that the apparatus control system with the above-mentioned configuration acquires the position information of cellular telephone 200b.

Issue instruction generating section 110 in general subscriber telephone 100b generates an issue instruction including the caller telephone number, signature and control instruction designating information for cellular telephone 200b whose position information is required to output to transmitting section 130 (step S1100). For example, the contents of the issue instruction to transmit are acquired from inputs from the input device such as a keyboard, pen and mouse.

The control instruction designating information indicates a number corresponding to the control instruction designated as an extraction target among control instructions stored in storage section 330 in IC card 300b, and is referred to when storage section 330 extracts a control instruction. The extraction is explained later on the control instruction based on the issue instruction including the control instruction designating information.

In addition, when general subscriber telephone 100b has a reader/writer apparatus, it may be possible to store contents of issue instructions to transmit in an information storage device such as a memory card. In other words, the reader/writer apparatus may read the contents of an issue instruction to transmit from the information storage device to acquire.

Further, contents of issue instructions to transmit are not limited to the foregoing. Combinations of contents of control instructions are capable of being modified by adjusting a format so that IC card 300b supports the format.

When issue instruction generating section 110 generates an issue instruction to transmit, it is possible to extract information from a device that stores the information such as a memory card to generate the instruction, instead of using devices such as a keyboard, pen and mouse.

Transmitting section 130 transmits the generated issue instruction to receiving section 220 in cellular telephone 200b (step S1200).

Receiving section 220 transfers the issue instruction from transmitting section 130 in general subscriber telephone 100b to control instruction generating section 310 in IC card 300b (step S1300). The transferred issue instruction is output from control instruction generating section 310 to encryption processing section 320 (step S1400).

Encryption processing section 320 fetches a public key of general subscriber telephone 100b from storage section 330 in IC card 300b (step S1500), and verifies the signature of the received issue instruction. When the signature verification succeeds, the verification result is output to control instruction generating section 310 (step S1600). Meanwhile, when the signature verification fails, the issue instruction from general subscriber telephone 100b is abandoned with the verification result. Accordingly, a wrong issue instruction is not left in cellular telephone 200b.

According to the control instruction designating information contained in the issue instruction, control instruction generating section 310 selects and extracts the control instruction in storage section 330 in IC card 300b (step S1700).

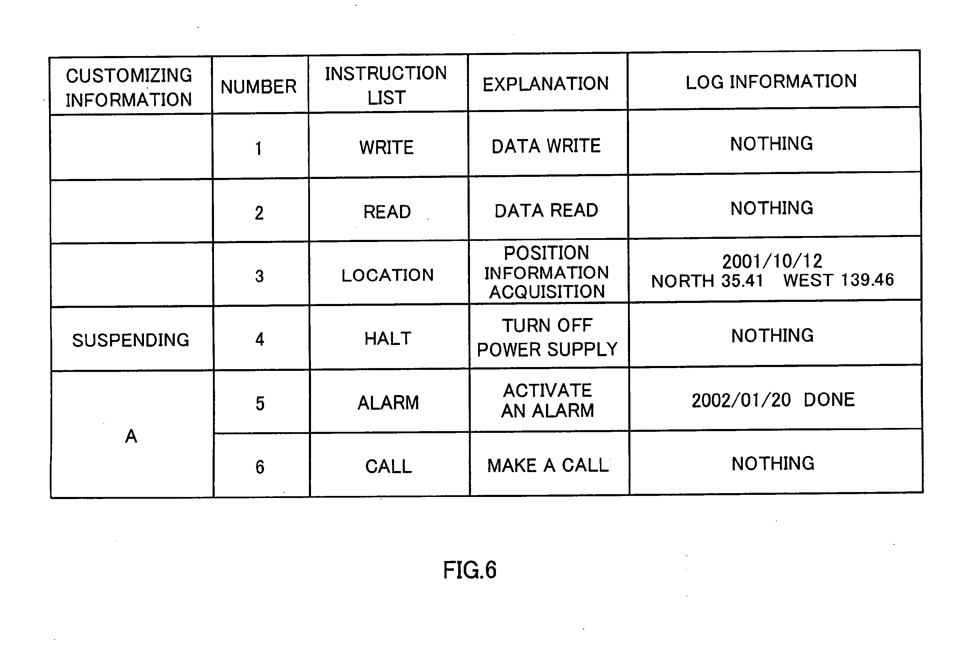

The extraction of the control instruction based on the issue instruction will be described below with reference to FIG.6. FIG.6 is a view showing examples of control instructions stored in storage section 330 in IC card 300b. In addition, control instructions stored in storage section 330 are not limited to those as shown in FIG. 6, and include any instructions to control cellular telephone 200b.

For example, when the control instruction designating information indicates a number of "3", control instruction generating section 310 in IC card 300b searches storage section 330 in IC card 300b, and extracts the control instruction of "Location" corresponding to Number "3". In addition, when only one control instruction is stored in storage section 330, it is possible to extract the control instruction without selecting.

When the number indicated in the control instruction designating information does not match any number of the control instruction stored in storage section 330 in IC card 300b, the issue instruction from general subscriber telephone 100b is abandoned.

Control instruction generating section 310 designates a transmission destination of the execution result and log using the caller telephone number contained in the issue instruction. It is possible to designate the transmission destination of the execution result based on the issue instruction from general subscriber telephone 100b or contents stored beforehand in storage section 300 in IC card 300b. Further, it is possible to transmit the execution result whose transmission destination is designated using a telephone number and mail address via the PSTN, or transmit to an apparatus corresponding to an individual ID using the individual ID that is assigned locally and is identifiable. The information to transmit is not limited to an execution result and log, and may be any information that is transmittable.

Control instruction generating section 310 outputs the extracted control instruction to terminal control section 340 in IC card 300b (step S1800). Terminal control section 340 issues the extracted control instruction to instruction executing section 230a in cellular telephone 200b (step S1900). Instruction executing section 230a having received the control instruction executes the control instruction.

In addition, instruction executing section 230a is capable of executing the control instruction not only by itself but also by cooperating with another section connected to instruction executing section 230a. For example, it may be possible that position information acquiring section 270 connected to instruction executing section 230a acquires the position information according to the control instruction and outputs the acquired position information to instruction executing section 230a, the section 230a performs the predetermined processing using the position information, and that display section 250 displays a map. In this embodiment, instruction executing section 230a outputs an execution instruction to position information acquiring section 270 to instruct the section 270 to perform the position information acquisition processing. Then, position information acquiring section 270 outputs the execution result of the position information acquisition processing to instruction executing section 230a (step S2000).

In addition, while in FIG.5 position information acquiring section 270 is provided inside cellular telephone 200b, the section 270 may be provided outside cellular telephone 200b and connected to cellular telephone 200b to be used. Also in this case, it is possible to execute the same operation as described above.

Instruction executing section 230a outputs the acquired position information to transmitting section 210 (step S2100). Further, the section 230a generates log information of the execution result to transmit to control instruction generating section 310 in IC card 300b (step S2200). Control instruction generating section 310 outputs the log information to storage section 330 in IC card 300b to store. Transmitting section 210 transmits the position information to general subscriber telephone 100b (step S2300).

Then, receiving section 140 in general subscriber telephone 100b outputs the position information transmitted from cellular telephone 200b to output section 120, and the information is output in an expression manner required by a sender of the instruction (step S2400). The data (herein, position information) transmitted from cellular telephone 200b to general subscriber telephone 100b is multimedia information including text, speech, and/or static image or moving picture that receiving section 140 in general subscriber telephone 100b can receive. Further, for the expression manner of information, the expression manner may be selected by a user or may be judged automatically from information registered beforehand and capability of the apparatus.

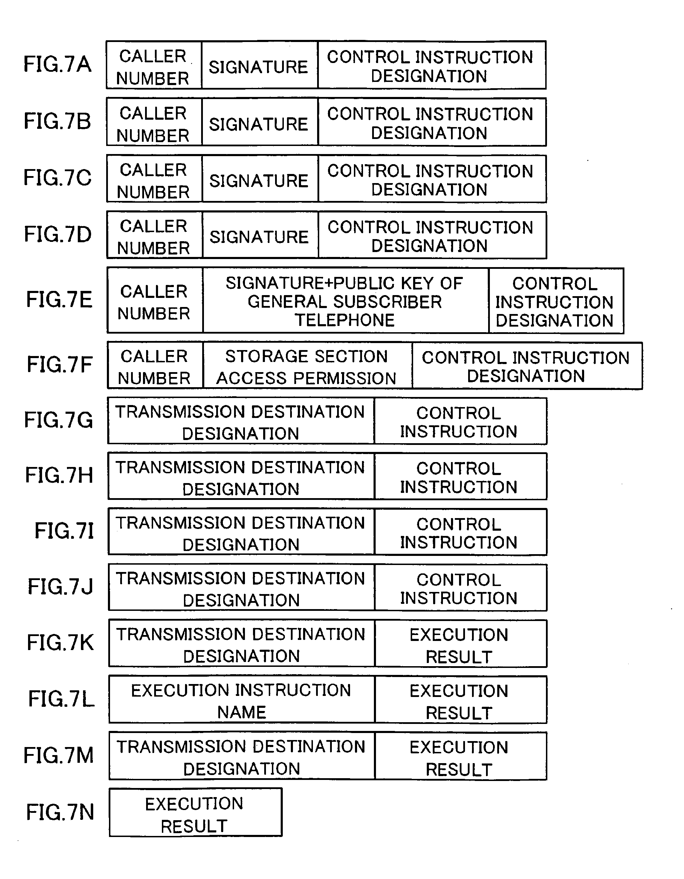

In addition, FIG. 7A to 7N show contents of each data exchanged in the apparatus control system for a period of time during which an issue instruction is generated in a general subscriber telephone, and then a cellular telephone outputs an execution result of a control instruction.

### <Operation rule information (Activation condition)>

The operation rule information will be described below which is information indicates an activation condition of each control instruction. The operation rule information is the same as described in the second embodiment, and the activation condition includes, for example, "control instruction X can be executed only after executing control instruction W", "execution of control instruction Y is prohibited", "control instruction Z can be executed only a predetermined number of times" or the like.

By generating the operation rule information of a control instruction and transmitting the information to IC card 300b from cellular telephone 200b, it is possible to individually set the operation of each control instruction stored in IC card 300b. The specific example will be described below with reference to FIG.6.

FIG.6 illustrates an example where two control instructions are executed according to one control instruction designating information, and another example where the use of a control instruction is suspended.

In FIG.6, instruction "Alarm" assigned Number "5" is an instruction to activate the alarm of cellular telephone 200b, and instruction "Call" assigned Number "6" is an instruction to make a call. By enclosing the two instructions in frame "A" to set, only designating "A" sets the operation rule of the control instruction such that Number "5" (instruction "Alarm") is first executed, and then Number "6" (instruction "Call") is executed. Practically, the alarm of cellular telephone 200b is activated, and a call is placed after deactivating the alarm.

Next, in FIG.6, Number "4" (instruction "Halt") is an instruction to turn OFF cellular telephone 200b. In addition, since Number "4" is set for the operation rule of "suspension", Number "4" cannot be executed even when designated.

Thus, a user is capable of customizing execution environments individually, and it is thereby possible to respond to various usage circumstances. In addition to the foregoing, for example, it is possible to set activation conditions that dynamically vary such as time designation where a control instruction is executed after a lapse of set time, number-of-usage-time designation where a control instruction can be used only the set number of times, precondition designation where a control instruction is only executed after another control instruction is executed, or the like. Further, as the activation control, it can be defined that a control instruction is executed by external factor such as a case that IC card 300b is inserted and a case that a signal from another apparatus is detected.

In addition, the contents set as operation rules are not limited to the above descriptions, and users are capable of setting various operation rules so as to facilitate using existing instruction operations.

As a result of the foregoing, by using the system where IC card 300b controls cellular telephone 200b, it is possible to operate cellular telephone 200b with a control instruction stored in IC card 300b using general subscriber telephone 100b from outside, for example, to acquire position information. Thus, the operation from outside enables a portable terminal (cellular telephone 200b) to perform processing, using a control instruction stored in IC card 300b.

A user of general subscriber telephone 100b is capable of controlling the portable terminal (cellular telephone 200b) with the authentication function readily using a familiar device. Further, when the portable terminal (cellular telephone 200b) is lost or stolen, it is made possible for the user to acquire the position information of cellular telephone 200b or to turn off the telephone 200b. Furthermore, by modifying a control instruction stored in IC card 300b, it is made possible to transfer or delete information stored in the memory of cellular telephone 200b. In this way, the above-mentioned apparatus control system is capable of being carried into practice in wide usages.

Further, since an issue instruction transmitted to IC card 300b is different from a control instruction for cellular telephone 200b, the user of cellular telephone 200b does not have risks such that misoperation occurs in transferring an issue instruction to IC card 300b and that a control instruction is directly output to cellular telephone 200b and executed.

Furthermore, since instructions to control cellular telephone 200b do not meet user's eye directly, cellular telephone manufacturers ensure the confidentiality of codes of control instructions. Moreover, another advantage of using IC card 300b is convenience in carrying, in addition to high confidentiality. Accordingly, it is possible to change user information and control instructions readily by exchanging IC card 300b. Further, when IC card 300b has clearance processing, by performing the processing from IC card 300b, it is possible to prevent leaks of the user information and to lead to enhancement in security. Furthermore, by leaving log information in the tamper-resistant device such as IC card 300b, it is possible to further enhance the above-mentioned security.

In this embodiment, general subscriber telephone 100b is used as the external terminal, and cellular telephone 200b is used with IC card 300b as the portable terminal. In addition, the apparatus control system of the present invention is not limited to the above-mentioned configuration, and any apparatuses can be applied to the apparatus control system of the present invention as long as the apparatuses have the same functions as described above.

Further, conventionally IC card 300b does not perform processing of control instructions, but it is made possible for the card 300b to perform part of processing of control instructions. Therefore, by directly connecting a section with the GPS function (position information acquiring section 270) to IC card 300b via an interface, it is made possible that IC card 300b executes a control instruction, and the portable terminal (cellular telephone 200b) displays an execution result or further performs an execution result. For example, IC card 300b acquires current position coordinates using the GPS function and transmits the result to the portable terminal (cellular telephone 200b), whereby using the information, the portable terminal (cellular telephone 200b) is capable of displaying and/or transmitting information on a neighborhood public facility or shopping information. In addition, a function directly connected to IC card 300b via the interface is not limited to GPS function, and may include functions on the analogy from conventional techniques such as wireless function and IR function. Further, since the processing is performed inside IC card 300b, it is possible to convert an existing control instruction into a control instruction having compatibility among a plurality of portable terminals (cellular telephones 200b). Also, it is possible to add the latest encryption technique.

Due to effects as described above, it is possible to enhance reliability of remote control of portable terminal over which users feel anxieties in authentication and data integrity conventionally. As the personal use, advantages are obtained in the case where a cellular telephone is lost or stolen, while being obtained in the case of performing rental business of cellular telephone or managing sales persons making the rounds, as the business use.

Further, in the case where a home server is provided in a home and performs centralized control of all the home electric appliances, using the apparatus control system of the present invention enables the home electric appliances in the home to be controlled from outside.

One example of centralized control of the appliances will be described below with reference to FIG.2. In this case, first apparatus 100 corresponds to a home server, second apparatus 200 corresponds to a home electric appliance, and third apparatus 300 corresponds to an IC card. When controlling the home electric appliance having the IC card from outside the home, the home server receives an issue instruction from an apparatus outside the home, and executes the instruction based on the issue instruction. In addition, a home electric appliance with the IC card may be an apparatus constructing a network such as a home server, router and hub. Further, instead of using an external terminal, using an apparatus on the home network as the base enables control of other home electric appliances having the IC card. Furthermore, when an IC card stores instructions of other home electric appliances, it is possible to control the other home electric appliances besides the home electric appliance to which the IC card is connected.

Moreover, in the above-mentioned examples, second apparatus 200 is low in security principally. On the contrary, third apparatus 300 is high in security. Accordingly, it is assumed that second apparatus 200 has third apparatus 300 determine whether to execute processing. In addition, independently of degree of security, it may be possible to provide second apparatus 200 with roles of adjustment or receipt for the entire system, and third apparatus 300 receives an instruction from second apparatus 200 to execute the processing. In this case, an example is a configuration in FIG.2 provided with an apparatus outside the home as first apparatus 100, a home server as second apparatus 200, and a home electric appliance as third apparatus 300. Also in this case, it is possible to control each home electrical appliance in the same way as in the example described above.

As described above, according to the present invention, it is possible to read out a control instruction in an IC card connected to a portable terminal using an issue instruction from outside as a trigger, control the portable terminal using the read control instruction, make the portable terminal perform the processing and obtain the execution result. Accordingly, it is possible to also control another terminal connected to the portable terminal, and establish a control system where an IC card controls a portable terminal with authentication of external terminal and integrity of data exchanged between terminals assured and with high security. Since the IC card stores control instructions, it is possible to take advantages of data confidentiality that the device i.e. IC card has. Further, since a plurality of control instructions is stored, it is possible to control various apparatuses using various control instructions.

It is effectiveness for users that a cellular telephone can be operated using a familiar and convenient terminal such as a telephone, PDA and personal computer as the external terminal. Further, since remote control is made possible, advantages are taken of the control in the case where a cellular telephone is lost or stolen for the personal use, while being taken of the control in the case of performing rental business of cellular telephone or managing sales persons making the rounds for the business use, and the convenience is thus improved.

Moreover, since control instructions are only stored inside an IC card, cellular telephone manufactures are capable of ensuring the confidentiality of control instructions without directly exposing the instructions to user's eye. According to the above mentioned effectiveness, the present invention has the significance.

The present invention is not limited to the above described embodiments, and various variations and modifications may be possible without departing from the scope of the present invention.

This application is based on the Japanese Patent Application No.2002-135120 filed on May 10, 2002, entire content of which is expressly incorporated by reference herein.

### Industrial Applicability

The present invention is ideally suited to the field of an apparatus control system in which a portable terminal is controlled in security by an external terminal.

## Claims

1. An apparatus control system wherein in order for a first apparatus (100) to control a second apparatus (200), the first apparatus (100) transmits via the second apparatus (100) an issue instruction that is an instruction for requesting an issue of a control instruction to a third apparatus (300) that stores the control instruction for the second apparatus (200), the third apparatus (200) transmits the control instruction to the second apparatus (200), and the second apparatus (200) executes the control instruction.

2. The apparatus control system according to claim 1, wherein contents of the issue instruction is not interpreted by the second apparatus.

3. The apparatus control system according to claim 1, wherein the second apparatus (200) transfers the issue instruction to the third apparatus (300).

4. The apparatus control system according to claim 1, wherein the second apparatus (200) is a mobile portable apparatus and/or the third apparatus (300) is a tamper-resistant memory device detachable from the second apparatus (200).

5. An apparatus control system comprising:
a first apparatus (100b) that has a transmitting section (130) that transmits an issue instruction that is an instruction for issuing a control instruction for the second apparatus (200b);
a second apparatus (200b) that has an instruction executing section (230a) that executes the control instruction from a third apparatus (300b); and
the third apparatus (300b) that has a control instruction generating section (310) that generates the control instruction for the second apparatus (200b) and a terminal control section (340) that issues the control instruction to the second apparatus (200b),
wherein the second apparatus (200b) transfers the issue instruction received from the first apparatus (100b) to the third apparatus (300b), and the third apparatus (300b) transmits to the second apparatus (200b) the control instruction corresponding to the issue instruction transferred from the second apparatus (200b).

6. The apparatus control system according to claim 5, wherein the second apparatus (200b) is connected to another apparatus (270), the control instruction generating section (310) in the third apparatus (300b) generates a control instruction for said another apparatus (270), and said another apparatus (270) executes the control instruction via the second apparatus (200b).

7. The apparatus control system according to claim 5, wherein the control instruction generating section (310) processes part of the control instruction for the second apparatus (200b), the terminal control section (340) transmits remaining part of the control instruction and an execution result obtained by processing of the third apparatus (300b) to the second apparatus (200b), and the instruction executing section (230a) in the second apparatus (200b) processes the execution result and the remaining part of the control instruction.

8. The apparatus control system according to claim 5, wherein the third apparatus (300b) has a control instruction storage section (330) that stores a control instruction, and based on the issue instruction, the control instruction generating section (310) in the third apparatus (300b) extracts a control instruction corresponding to the issue instruction from the control instruction storage section (330).

9. The apparatus control system according to claim 5, wherein the second apparatus (200b) is connected to another apparatus (270), a control instruction generated in the control instruction generating section (310) is for the second apparatus (200b) and said another apparatus (270), and the control instruction is transmitted to the second apparatus (200b) and said another apparatus (270) via the second apparatus (270).

10. The apparatus control system according to claim 5, wherein the control instruction generating section (310) describes in control instruction transmission destination information that is information on a transmission destination to which the execution result and/or log is transmitted.

11. The apparatus control system according to claim 10, wherein the transmission destination information is set based on contents of the issue instruction.

12. The apparatus control system according to claim 10, wherein the transmission destination is the third apparatus (300b).

13. The apparatus control system according to claim 5, wherein the third apparatus (300b) has a control instruction storage section (330) that stores a control instruction, and the control instruction storage section (330) manages operation rule information indicative of an activation condition of each control instruction.

14. The apparatus control system according to claim 13, wherein the control instruction generating section (310) sets the operation rule information based on information received from the second apparatus (200b).

15. The apparatus control system according to claim 5, wherein the second apparatus (200b) is a mobile portable apparatus and/or the third apparatus (300b) is a tamper-resistant memory device detachable to the second apparatus (200b).

16. An apparatus control apparatus comprising:
a control instruction generating section (310) that generates a control instruction for a second apparatus 200b); and
a communication section (310,340) that communicates with the second apparatus (200b),
wherein an issue instruction that is an instruction for requesting an issue of a control instruction for the second apparatus (200b) is received from the second apparatus (200b), while a control instruction corresponding to the issue instruction is transmitted to the second apparatus (200b).

17. An issue instruction transmitting apparatus comprising:
a section (130) that performs wired communications and/or wireless communications; and
an issue instruction generating section (110) that generates an issue instruction that is an instruction for requesting an issue of a control instruction for a second apparatus (200b),
wherein the issue instruction is transmitted to the second apparatus (200b).

18. A control instruction executing apparatus comprising:
a section (220) that communicates with a first apparatus;
a section (220,230a) that communicates with a third apparatus; and
an instruction executing section (230a) that executes a control instruction,
wherein an issue instruction that is an instruction for requesting an issue of a control instruction received from the first apparatus (100b) is transferred to the third apparatus (300b), while the control instruction corresponding to the issue instruction is received from the third apparatus (300b) to be executed.

19. The control instruction executing apparatus according to claim 18, wherein the apparatus (200b) verifies whether information received from the first apparatus (100b) is an issue instruction, and when the information is the issue instruction, transmits the information to the third apparatus (300b).

20. A program comprising the steps of:
generating a control instruction that is an instruction for requesting an issue of a control instruction for a second apparatus (200); and
transmitting the generated instruction to the second apparatus (200).

21. A program comprising the steps of:
receiving from a second apparatus (200), an issue instruction that is an instruction for requesting an issue of a control instruction for the second apparatus (200) ;
generating the control instruction corresponding to the issue instruction; and
transmitting the control instruction to the second apparatus (200).

22. A program executed in a second apparatus (200), comprising the steps of:
receiving an issue instruction that is an instruction for requesting an issue of a control instruction for the second apparatus (200) from a first apparatus (100);
transmitting the received issue instruction to a third apparatus (300);
receiving the control instruction corresponding to the issue instruction from the third apparatus (300); and
executing the received control instruction.
